# FASCICULE DE BREVET EUROPEEN

(11) **EP 1 297 267 B1**
(45) Date de publication et mention de la délivrance du brevet: **27.09.2006**
(21) Numéro de dépôt: 01984114.7
(22) Date de dépôt: 05.07.2001
(51) Int. Cl.: F16C 33/32

(54) **ROULEMENTS HYBRIDES D'ATTERRISSAGE POUR POMPE A VIDE**
HYBRID NOTLAGER FÜR VACUUMPUMPE
HYBRID CONTACT ROLLER BEARINGS FOR VACUUM PUMP

(30) Priorité: 06.07.2000 FR 0008795
(43) Date de publication de la demande: 02.04.2003
(73) Titulaire: ALCATEL, 75008 Paris (FR)
(72) Inventeur: BOUILLE, André, F-74000 Annecy (FR)
(74) Mandataire: Lamoureux, Bernard
(86) Numéro de dépôt international: PCT/FR2001/002151
(87) Numéro de publication internationale: WO 2002/002957

(56) Documents cités:
- EP-A- 0 711 929
- DE-A- 19 729 450
- FR-A- 1 540 168

## Description

### DOMAINE TECHNIQUE DE L'INVENTION

La présente invention concerne la suspension des rotors des pompes à vide.

Dans les pompes à vide, un rotor mobile en rotation dans un stator est tenu par des paliers magnétiques qui, en fonctionnement normal, maintiennent en position radiale centrée le rotor dans le stator selon une précision de maintien normal centré, sans contact mécanique entre le rotor et le stator. Les paliers magnétiques comportent des électroaimants alimentés en énergie électrique par des circuits appropriés assurant un asservissement de position radiale du rotor dans le stator.

L'efficacité du maintien radial du rotor dans le stator est déterminée par la force des électroaimants, et le maintien nécessite l'alimentation suffisante des électroaimants en énergie électrique.

Il peut se produire parfois un défaut ou une insuffisance de fonctionnement normal des paliers magnétiques, par exemple lors d'une contrainte subite et importante sur le rotor ou lors d'une interruption de l'alimentation électrique des électroaimants. Dans ce cas, les paliers magnétiques n'assurent plus la fonction de centrage du rotor, et il se produit une étape "d'atterrissage" dans laquelle le rotor passe d'un état de maintien sans contact mécanique à un état de maintien par contact mécanique. Au cours de cet atterrissage, le rotor tend à venir en contact du stator. Par suite de la rotation très rapide du rotor, par exemple de l'ordre de 30 000 tours par minute, un tel contact peut provoquer la destruction de la pompe à vide.

Pour résoudre ce problème, on a déjà prévu d'équiper les pompes à vide avec des paliers mécaniques secondaires d'atterrissage à roulement qui, à défaut de fonctionnement normal des paliers magnétiques, limitent les déplacement radiaux du rotor dans le stator en assurant un centrage approximatif du rotor et en limitant les mouvements radiaux du rotor à une valeur inférieure à l'entrefer des paliers magnétiques.

Cependant, le nombre d'atterrissages possibles sans dégradation sensible des paliers mécaniques reste limité, ce qui réduit la fiabilité de la pompe à vide et augmente la fréquence des opérations de maintenance.

Il existe un besoin pour augmenter le nombre d'atterrissages possibles et la durée de fonctionnement des paliers mécaniques d'atterrissage à roulement.

La présente invention résulte de l'observation selon laquelle certains défauts de fiabilité des paliers mécaniques d'atterrissage à roulement résultent de la résistance à l'accélération du roulement d'atterrissage. En effet, en fonctionnement normal des paliers magnétiques ayant des paliers mécaniques d'atterrissage montés sur le stator, les roulements des paliers mécaniques d'atterrissage sont à l'arrêt, solidaires du stator ; lors de l'interruption de fonctionnement des paliers magnétiques, le rotor vient au contact des bagues intérieures encore immobiles des paliers mécaniques d'atterrissage, et entraîne en rotation les bagues intérieures des roulements et les éléments roulants situés entre les bagues intérieures et les bagues extérieures ; par l'effet de la résistance à l'accélération du roulement d'atterrissage, la vitesse de rotation des bagues intérieures n'augmente que progressivement, de sorte qu'un glissement se produit entre le rotor et les bagues intérieures des paliers mécaniques d'atterrissage. Il en résulte inévitablement une usure des surfaces respectives en contact du rotor et des bagues intérieures des paliers mécaniques d'atterrissage, ce qui progressivement augmente les jeux et réduit l'efficacité du dispositif ; en outre, les frottements entre les différentes pièces provoquent l'apparition possible de copeaux ou de limaille qui risquent de bloquer les éléments roulants du palier mécanique.

Les phénomènes d'usure et leurs conséquences sont d'autant plus accentués lorsque les bagues intérieures des paliers mécaniques d'atterrissage subissent des phénomènes s'opposant à leur accélération rapide en rotation pour atteindre le plus tôt possible la vitesse de rotation du rotor.

A cet égard, une première cause de résistance à l'accélération du roulement d'atterrissage est son inertie. Des tentatives ont été faites pour réduire l'inertie des roulements d'atterrissage, en utilisant des éléments roulants ayant une plus faible masse. C'est ainsi qu'on a imaginé de remplacer les éléments roulants traditionnels tels que des billes en acier inoxydable par des billes en céramique, de densité très inférieure à l'acier. Dans ce cas, tous les éléments roulants sont des billes en céramique. Il en résulte un coût de production très supérieur, car les billes en céramique sont beaucoup plus onéreuses que les billes en acier. On constate une légère amélioration de la longévité des paliers d'atterrissage, par réduction des phénomènes d'usure se produisant entre le rotor et les bagues de roulement de rotor. Mais cette amélioration reste insuffisante, d'autant qu'elle entraîne un surcoût important. Et cette solution à billes en céramique présente l'autre inconvénient de réduire sensiblement la conductibilité thermique entre le stator et le rotor, et de réduire en conséquence la capacité de refroidissement du rotor.

Une seconde cause de résistance à l'accélération dû roulement d'atterrissage semble être le frottement se produisant entre les éléments roulants consécutifs eux-mêmes, frottement qui paraît être accentué par les accélérations très élevées subies par le roulement d'atterrissage lors d'un atterrissage. L'invention met à profit cette analyse en proposant une solution permettant de réduire très sensiblement ces frottements.

### EXPOSE DE L'INVENTION

Ainsi, le problème proposé par la présente invention est de concevoir une nouvelle structure de palier mécanique d'atterrissage à roulement, qui présente une longévité accrue pour permettre un plus grand nombre d'atterrissages et une plus grande durée de fonctionnement sans défaut.

Pour cela, l'invention prévoit une structure particulière permettant de réduire au mieux la résistance à l'accélération du roulement d'atterrissage, et de réduire en particulier les forces de frottement se produisant entre les éléments mobiles du roulement d'atterrissage et susceptibles de résister à l'accélération du roulement d'atterrissage lors d'un atterrissage.

Selon un autre objet, l'invention a pour but de réduire le coût de production des roulements d'atterrissage de pompe à vide, en limitant l'usage de matières onéreuses.

Selon l'invention, ces effets doivent être obtenus sans recourir à des moyens de lubrification par des éléments liquides susceptibles de polluer le vide créé par la pompe à vide.

Pour atteindre ces objets ainsi que d'autres, l'invention prévoit une structure de roulement d'atterrissage pour pompe à vide comprenant les caractéristiques de la revendication 1.

Selon un mode de réalisation simplifié, les éléments roulants sont des billes sphériques.

De préférence, les éléments roulants en acier sont constitués d'acier inoxydable, tandis que les éléments roulants en céramique sont constitués de nitrure de silicium.

Les pistes de roulement peuvent être en acier inoxydable.

Les éléments roulants peuvent avoir tous le même diamètre lorsque le roulement est dans les conditions de températures normales de fonctionnement. Les températures habituelles de fonctionnement sont de l'ordre de 60°C à 90°C. Pour cela, on prévoit que les éléments roulants en céramique ont, à température ambiante, un diamètre légèrement supérieur au diamètre des éléments roulants en acier, pour compenser les différences de coefficient de dilatation thermique de la céramique et de l'acier.

En alternative, les éléments roulants en céramique peuvent avoir un diamètre légèrement inférieur au diamètre des éléments roulants en acier dans les conditions de température normales de fonctionnement. En pratique, on peut par exemple utiliser alors des éléments roulants qui ont le même diamètre à température ambiante.

Une pompe à vide selon l'invention comprend au moins un roulement d'atterrissage tel que défini ci-dessus.

Par exemple, une telle pompe à vide comprend un rotor mobile en rotation dans un stator, avec au moins un palier magnétique radial qui, en fonctionnement normal, maintient en position radiale centrée le rotor dans le stator, et avec au moins un palier mécanique d'atterrissage à roulement d'atterrissage qui, à défaut de fonctionnement normal des paliers magnétiques radiaux, limite les déplacements radiaux du rotor dans le stator en assurant un centrage approximatif du rotor, un jeu radial étant prévu entre l'une des bagues de roulement de rotor ou de stator et la surface d'appui correspondante du rotor ou du stator.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue générale en coupe longitudinale d'une pompe à vide dont le rotor est tenu par des paliers magnétiques et par des paliers mécaniques d'atterrissage associés ;
- la figure 2 est une vue de détail en coupe agrandie de la zone A de la figure 1, illustrant un demi-palier mécanique d'atterrissage à roulement selon un mode de réalisation de la présente invention ;
- la figure 3 est une vue de face agrandie d'un roulement d'atterrissage selon un mode de réalisation de l'invention ; et
- la figure 4 est une vue en perspective en coupe partielle du roulement d'atterrissage de la figure 3.

### DESCRIPTION DES MODES DE REALISATION PREFERES

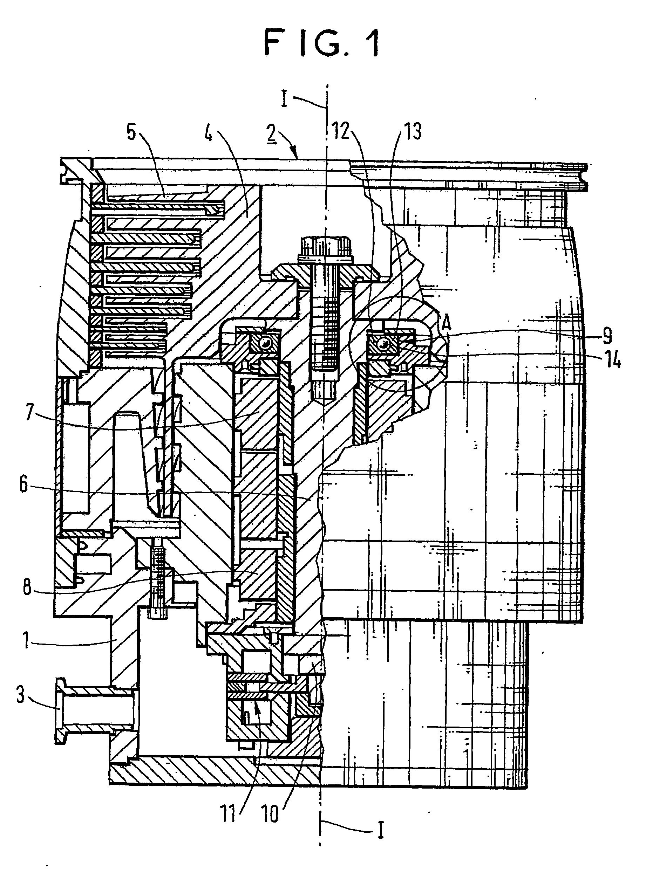

Dans le mode de réalisation de la figure 1, une pompe à vide comprend de façon générale un stator 1 ayant une entrée d'aspiration 2 axiale et une sortie de refoulement 3 radiale. Un rotor 4 est monté à rotation axiale dans le stator 1 selon l'axe longitudinal I-I. Le rotor 4 comprend un système d'aspiration illustré par les ailettes 5, et un arbre 6 tourillonnant dans des paliers du stator 1. On distingue, sur la figure, deux paliers magnétiques radiaux 7 et 8, et deux paliers mécaniques d'atterrissage 9 et 10 à roulement d'atterrissage à action radiale. Pour mémoire, on distingue également un palier magnétique axial 11.

En fonctionnement normal, c'est-à-dire en l'absence d'une sollicitation excessive sur l'arbre 6 de la pompe et en cas de fonctionnement normal des paliers magnétiques, ceux-ci maintiennent correctement en position axiale centrée le rotor 4, et les paliers mécaniques d'atterrissage 9 et 10 ne touchent pas l'arbre 6.

Dans le palier mécanique d'atterrissage 9, on distingue une bague de roulement de rotor 12, disposée à proximité et autour de l'arbre 6 du rotor 4, et une bague coaxiale de roulement de stator 13 disposée au contact du stator 1. Les bagues de roulement de rotor 12 et de stator 13 définissent entre elles un logement de roulement 19. Des éléments roulants 14 tels que des billes, des aiguilles ou tout autre type d'éléments roulants connus, sont disposés dans le logement de roulement 19 entre la bague de roulement de rotor 12 et la bague coaxiale de roulement de stator 13, pour constituer un roulement autorisant la rotation axiale relative des deux bagues de roulement 12 et 13.

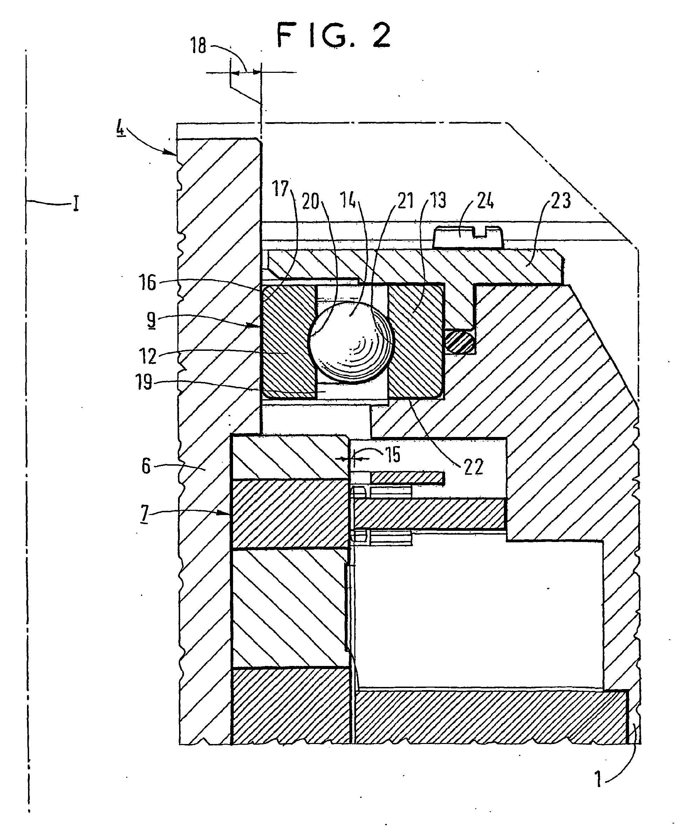

On se référera maintenant à la figure 2, illustrant plus en détail et à plus grande échelle un demi-palier mécanique d'atterrissage 9 en situation entre l'arbre 6 du rotor 4 et une portion correspondante du stator 1. On retrouve l'élément roulant 14 dans le logement de roulement 19 entre la bague de roulement de rotor 12 et la bague coaxiale de roulement de stator 13. L'élément roulant 14 roule sur des pistes de roulement 20 et 21 respectives des bagues de roulement de rotor 12 et de stator 13. On retrouve également le palier magnétique radial 7 qui, en fonctionnement normal, assure le centrage de l'arbre 6 du rotor 4 dans le stator 1 en laissant libre un entrefer 15 annulaire définissant le déplacement radial maximal de l'arbre 6 dans le stator 1. Dans les conditions habituelles, l'entrefer 15 peut être d'environ 0,2 à 0,4 mm par exemple. Le palier mécanique d'atterrissage 9 a pour but de limiter les possibilités de déplacement radial de l'arbre 6 du rotor 4 dans le stator 1 à une valeur nettement inférieure à cet entrefer 15, pour éviter la dégradation des paliers magnétiques en cas d'atterrissage.

Entre la face annulaire intérieure 16 de la bague de roulement de rotor 12 et une première portée 17 correspondante de rotor 4, on prévoit un jeu radial 18 nettement inférieur à l'entrefer 15 mais seulement légèrement supérieur à la précision de maintien normal centré du rotor 4 par le ou les paliers magnétiques radiaux 7. Cette précision de maintien normal centré du rotor 4 est généralement très bonne, inférieure à quelques microns.

La bague coaxiale de roulement de stator 13 est engagée et fortement freinée ou bloquée en rotation dans un logement frontal du stator 1, entre un épaulement axial 22 et une couronne rapportée de fixation 23 tenue sur le stator 1 par des vis dont on distingue la tête 24.

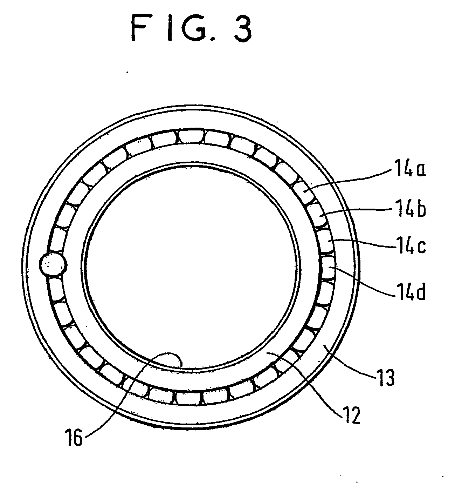

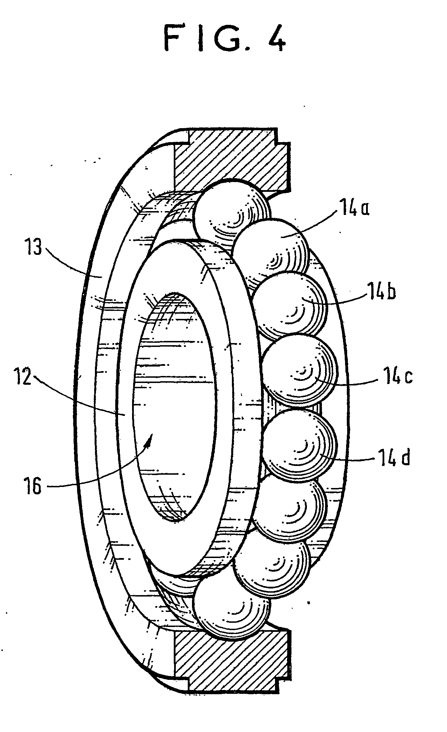

Dans le mode de réalisation illustré sur les figures 3 et 4, le roulement d'atterrissage comprend des éléments roulants en forme de bille sphérique. Les éléments roulants comprennent une succession alternée d'éléments roulants dont la surface externe est en acier et d'éléments roulants dont la surface externe est en céramique. Ainsi, à titre d'exemple, les éléments roulants 14a et 14c ont une surface externe en acier, tandis que les éléments roulants 14b et 14d ont une surface externe en céramique.

Pour les éléments roulants 14a et 14c en acier, on peut avantageusement utiliser un acier inoxydable.

Pour les éléments roulants 14b et 14d en céramique, on peut avantageusement utiliser le nitrure de silicium.

Lors d'un atterrissage, les éléments roulants 14a-14d entrent en rotation, et les éléments roulants adjacents tels que les éléments 14a et 14b viennent en contact l'un de l'autre par une portion de leur surface périphérique, produisant un frottement. Grâce à l'alternance entre les éléments roulants en acier et les éléments roulants en céramique, les frottements se produisent toujours entre deux éléments roulants réalisés en des matériaux différents, ce qui favorise le glissement et réduit ainsi les forces de frottement s'opposant à l'accélération rapide du roulement d'atterrissage.

Les pistes de roulement 20 et 21 (figure 2) peuvent être en acier inoxydable.

Par le fait que l'on utilise seulement un élément roulant sur deux en un matériau plus onéreux tel que la céramique, on limite le surcoût de production, en obtenant simultanément des avantages très importants sur la longévité du palier d'atterrissage et de la pompe à vide en général.

Un autre avantage résulte de la présence d'un certain nombre d'éléments roulants 14a, 14c en acier, bon conducteur de la chaleur, qui maintient une capacité de refroidissement suffisante du rotor. On prévoit pour cela que les éléments roulants 14a, 14c en acier restent au contact des pistes de roulement 20, 21 dans les conditions de température normales de fonctionnement.

En d'autres termes, dans ces conditions de température normales de fonctionnement, le diamètre des éléments roulants 14b, 14d en céramique doit de préférence être inférieur ou au plus égal au diamètre des éléments roulants 14a, 14c en acier.

Lors d'un atterrissage, le fonctionnement est le suivant : initialement, la bague de roulement de rotor 12 ne touche pas l'arbre 6 qui tourne à grande vitesse autour de son axe longitudinal I-I. A l'interruption de fonctionnement des paliers magnétiques radiaux tels que le palier 7, le rotor 4 peut se déplacer radialement selon le premier jeu radial 18 jusqu'à venir en contact de la bague de roulement de rotor 12 qui est initialement immobile et se trouve alors entraînée en rotation et entraîne également en rotation les éléments roulants 14. La bague coaxiale de roulement de stator 13 est bloquée ou au moins freinée en rotation dans le stator 1.

A cause de l'inertie et des frottements dans le roulement d'atterrissage, la bague de roulement de rotor 12 ne prend pas instantanément la vitesse de rotation élevée du rotor 4. Un frottement se produit donc entre la portée 17 du rotor 4 et la face annulaire intérieure correspondante 16 de la bague de roulement de rotor 12. Grâce à la réduction des frottements existant entre les éléments roulants 14 adjacents, on permet l'accélération rapide de la bague de roulement de rotor 12, et on réduit donc la durée du frottement entre la portée 17 de rotor 4 et la face annulaire intérieure 16 de la bague de roulement de rotor 12.

Les roulements d'atterrissage 9 et 10 peuvent être rendus solidaires du rotor 4, au lieu d'être solidaires du stator.

## Revendications

1. Roulement d'atterrissage pour pompe à vide, comprenant :
- une bague de roulement de rotor (12) et une bague coaxiale de roulement de stator (13) qui définissent entre elles un logement de roulement (19),
- des éléments roulants (14a, 14b, 14c, 14d) logés les uns à la suite des autres dans le logement de roulement (19) et venant rouler sur des pistes de roulement (20, 21) respectives des bagues de roulement de rotor (12) et de stator (13),
**caractérisé en ce que** les éléments roulants comprennent une succession alternée d'éléments roulants (14a, 14c) dont la surface externe est en acier et d'éléments roulants (14b, 14d) dont la surface externe est en céramique, et **en ce que** les éléments roulants (14b, 14d) en céramique ont un diamètre au plus égal au diamètre des éléments roulants (14a, 14c) en acier dans les conditions de température normales de fonctionnement, de l'ordre de 60°C à 90°C, le rapport des diamètres à température ambiante des éléments en céramique et des éléments en acier étant choisi de manière à compenser les différences de coefficient de dilatation thermique de la céramique et de l'acier.

2. Roulement d'atterrissage selon la revendication 1 **caractérisé en ce que** les éléments roulants (14, 14a, 14b, 14c, 14d) sont des billes sphériques.

3. Roulement d'atterrissage selon l'une des revendications 1 ou 2, **caractérisé en ce que** les éléments roulants (14a, 14c) en acier sont constitués d'acier inoxydable.

4. Roulement d'atterrissage selon l'une quelconque des revendications 1 à 3, **caractérisé en ce que** les éléments roulants (14b, 14d) en céramique sont constitués de nitrure de silicium.

5. Roulement d'atterrissage selon l'une quelconque des revendications 1 à 4, **caractérisé en ce que** les pistes de roulement (20, 21) sont en acier inoxydable.

6. Roulement d'atterrissage selon la revendication 1 dans lequel les éléments roulants (14b, 14d) en céramique ont un diamètre égal au diamètre des éléments roulants (14a, 14c) en acier dans les conditions de température normales de fonctionnement et un diamètre légèrement supérieur au diamètre des éléments roulants (14a, 14c) en acier à température ambiante.

7. Roulement d'atterrissage selon la revendication 1 dans lequel les éléments roulants (14b, 14d) en céramique ont un diamètre légèrement inférieur au diamètre des éléments roulants (14a, 14c) en acier dans les conditions de température normales de fonctionnement et un diamètre égal au diamètre des éléments roulants (14a, 14c) en acier à température ambiante.

8. Pompe à vide comprenant au moins un palier mécanique d'atterrissage (9) à roulement d'atterrissage selon l'une quelconque des revendications 1 à 7.

9. Pompe à vide selon la revendication 8, comprenant un rotor (4) mobile en rotation dans un stator (1), avec au moins un palier magnétique radial (7) qui, en fonctionnement normal, maintient en position radiale centrée le rotor (4) dans le stator (1), et avec au moins un palier mécanique d'atterrissage (9) à roulement d'atterrissage qui, à défaut de fonctionnement normal des paliers magnétiques radiaux (7), limite les déplacements radiaux du rotor (4) dans le stator (1) en assurant un centrage approximatif du rotor (4), un jeu radial (18) étant prévu entre l'une des bagues de roulement de rotor (12) ou de stator (13) et la portée (17) correspondante du rotor (4) ou du stator (1).

## Claims

1. Vacuum pump landing bearing comprising:
- a rotor bearing ring (12) and a coaxial stator bearing ring (13) which define between them a bearing housing (19), and
- a succession of rolling members (14a, 14b, 14c, 14d) accommodated in the bearing housing (19) and rolling on respective races (20, 21) of the rotor bearing ring (12) and the stator bearing ring (13),
**characterised in that** the rolling members comprise an alternating succession of rolling members (14a, 14c) whose external surface is of steel and rolling members (14b, 14d) whose external surface is of ceramic and the ceramic rolling members (14b, 14d) have a diameter at most equal to the diameter of the steel rolling members (14a, 14c) under normal operating temperature conditions, of the order of 60°C to 90°C, the ratio of the diameters of the ceramic members and the steel members at room temperature being selected to compensate the difference between the coefficients of thermal expansion of the ceramic and the steel.

2. Landing bearing according to claim 1, **characterised in that** the rolling members (14, 14a, 14b, 14c, 14d) are spherical balls.

3. Landing bearing according to either claim 1 or claim 2, **characterised in that** the steel rolling members (14a, 14c) are of stainless steel.

4. Landing bearing according to any one of claims 1 to 3, **characterised in that** the ceramic rolling members (14b, 14d) are of silicon nitride.

5. Landing bearing according to any one of claims 1 to 4, **characterised in that** the races (20, 21) are of stainless steel.

6. Landing bearing according to claim 1 wherein the ceramic rolling members (14b, 14d) have a diameter equal to the diameter of the steel rolling members (14a, 14c) under normal operating temperature conditions and a diameter slightly greater than the diameter of the steel rolling members (14a, 14c) at room temperature.

7. Landing bearing according to claim 1 wherein the ceramic rolling members (14b, 14d) have a diameter slightly less than the diameter of the steel rolling members (14a, 14c) under normal operating temperature conditions and a diameter equal to the diameter of the steel rolling members (14a, 14c) at room temperature.

8. Vacuum pump comprising at least one mechanical landing rolling bearing (9) according to any one of claims 1 to 7.

9. Vacuum pump according to claim 8 comprising a rotor (4) rotatable in a stator (1), at least one radial magnetic beefing (7) which, in normal operation, retains the rotor (4) in a radially centred position in the stator (1), and at least one mechanical landing rowing bearing (9) which limits radial displacement of the rotor (4) in the stator (1) failing normal operation of the radial magnetic bearing (7) by approximately centring the rotor (4), a radial clearance (18) being provided between the rotor bearing ring (12) or the stator bearing ring (13) and the corresponding bearing surface (17) of the rotor (4) or the stator (1), respectively.

## Patentansprüche

1. Aufsetz-Mälzlager für eine Vakuumpumpe, das folgende Komponenten umfasst:
- einen Rotor-Wälzring (12) und einen koaxialen Stator-Wälzring (13), die zwischeneinander einen Lagersitz (19) definieren,
- Wälzkörper (14a, 14b, 14c, 14d), die abwechselnd in dem Lagersitz (19) angeordnet sind und in den jeweiligen Lagerbahnen (20, 21) der Wälzringe von Rotor (12) und Stator (13) laufen,
**dadurch gekennzeichnet, dass** die Wälzkörper eine alternierende Folge von Wälzkörpern (14a, 14c), deren Außenfläche aus Stahl besteht, und Wälzkörpern (14b, 14d), deren Außenfläche aus Keramik besteht, umfassen, sowie **dadurch**, dass die Wälzkörper (14b, 14d) aus Keramik einen Durchmesser aufweisen, der unter normalen Betriebstemperaturbedingungen, die in einem Bereich zwischen 60°C und 90°C liegen, höchstens gleich dem Durchmesser der Wälzkörper (14a, 14c) aus Stahl beträgt, wobei das Verhältnis der Durchmesser von Keramikkörpern und Stahlkörpern bei Raumtemperatur so gewählt wird, dass die unterschiedlichen Wärmeausdehnungskoeffizienten von Keramik und Stahl ausgeglichen werden.

2. Aufsetz-Wälzlager gemäß Anspruch 1, **dadurch gekennzeichnet, dass** es sich bei den Wälzkörpern (14, 14a, 14b, 14c, 14d) um sphärische Kugeln handelt.

3. Aufsetz-Wälzlager gemäß einem der Ansprüche 1 oder 2, **dadurch gekennzeichnet, dass** die Stahl-Mälzkörper (14a, 14c) aus Edelstahl bestehen.

4. Aufsetz-Wälzlager gemäß einem der Ansprüche 1 bis 3, **dadurch gekennzeichnet, dass** die Keramik-Wälzköper (14b, 14d) aus SiliziumNitrid bestehen.

5. Aufsetz-Wälzlager gemäß einem der Ansprüche 1 bis 4, **dadurch gekennzeichnet, dass** die Lagerbahnen (20, 21) aus Edelstahl bestehen.

6. Aufsetz-Wälzlager gemäß Anspruch 1, in dem die Wälzkörper (14b, 14d) aus Keramik bei normalen Betriebstemperaturbedingungen einen Durchmesser gleich dem Durchmesser der Wälzkörper (14a, 14c) aus Stahl und bei Raumtemperatur einen geringfügig größeren Durchmesser als der Durchmesser der Wälzkörper (14a, 14c) aus Stahl aufweisen.

7. Aufsetz-Wälzlager gemäß Anspruch 1, in dem die Wälzlager (14b, 14d) aus Keramik unter normalen Betriebstemperaturbedingungen einen geringfügig geringeren Durchmesser als der Durchmesser der Wälskorper (14a, 14c) aus Stahl und bei Raumtemperatur einen Durchmesser gleich dem Durchmesser der Wälzkörper (14a, 14c) aus Stahl aufweisen.

8. Vakuumpumpe, die mindestens ein mechanisches Aufsetzlager (9) mit Aufsetz-Mälzlager gemäß einem der Ansprüche 1 bis 7 umfasst.

9. Vakuumpumpe gemäß Anspruch 8, die einen drehbaren Rotor (4) in einem Stator (1) umfasst, mit mindestens einem Radial-Magnetlager (7), das die zentrierte Radialstellung des Rotors (4) im Stator (1) im Normalbetrieb aufrecht erhält, und mit mindestens einem mechanischen Aufsetzlager (9) mit Aufsets-Mälzlager, das die radiale Verschiebung des Rotors (4) im Stator (1) bei einer Beeinträchtigung des Normalbetriebs der Radial-Magnetlager (7) beschränkt, indem es die annähernde Zentrierung des Rotors (4) sicherstellt, wobei ein radiales Spiel (18) zwischen einem der Wälzringe des Rotors (12) oder des Stators (13) und der entsprechenden Lagerfläche (17) des Rotors (4) oder des Stators (1) vorgesehen ist.
